# EUROPEAN PATENT APPLICATION

(11) **EP 4 403 800 A1**
(43) Date of publication of application: **24.07.2024**
(21) Application number: 22869591.2
(22) Date of filing: 14.03.2022
(51) Int. Cl.: F16H 49/00, H02K 7/116

(54) **GEAR MOTOR**

(30) Priority: 16.09.2021 JP 2021151423
(71) Applicant: Sumitomo Heavy Industries, Ltd., Tokyo 141-6025 (JP)
(72) Inventor: YAMAMOTO, Taizo, Yokosuka-shi, Kanagawa 237-8555 (JP); MINARI, Takahiro, Yokosuka-shi, Kanagawa 237-8555 (JP); NAKAGAWA, Hiroki, Yokosuka-shi, Kanagawa 237-8555 (JP); YAMANAKA, Kazuma, Yokosuka-shi, Kanagawa 237-8555 (JP)
(74) Representative: Louis Pöhlau Lohrentz
(86) International application number: PCT/JP2022/011273
(87) International publication number: WO 2023/042439

(57) **Abstract**

A gear motor (1) includes a motor (20) and a speed reducer (30) of a magnetically modulated gear. The motor (20) and the speed reducer (30) of the magnetically modulated gear have different frequencies of vibration components. Therefore, vibration and noise are suitably suppressed.

## Description

### Technical Field

The present invention relates to a gear motor.

### Background Art

In the related art, a magnetically modulated gear is known in which a pole piece member having a plurality of pole pieces is disposed between two magnets disposed on the inner and outer peripheries to modulate a magnetic flux distribution between the magnets on the inner and outer peripheries. In the magnetically modulated gear, torque is transmitted between the magnet on the inner peripheral side and the pole piece member to transmit decelerating or accelerating rotation (for example, see PTL 1).

### Citation List

### Patent Literature

[PTL 1] Japanese Unexamined Patent Publication No. 2017-17984

### Summary of Invention

### Technical Problem

In a gear motor in which a magnetically modulated gear and a motor are connected to each other, there is a concern that vibration and noise will increase due to the influence of individual vibration components of the magnetically modulated gear and the motor.

The present invention has been made in view of the above circumstances, and an object of the present invention is to suitably suppress vibration and noise.

### Solution to Problem

According to the present invention, there is provided a gear motor including a motor and a magnetically modulated gear. The motor and the magnetically modulated gear are configured to have different frequencies of vibration components.

### Advantageous Effects of Invention

According to the present invention, it is possible to suitably suppress vibration and noise.

### Brief Description of Drawings

Fig. 1 is a cross-sectional view illustrating a gear motor according to an embodiment.
Fig. 2 is a perspective view illustrating a main portion of a speed reducer included in the gear motor according to the embodiment.
Fig. 3 is a table summarizing torque pulsation components of a motor.
Fig. 4 is a table summarizing torque pulsation components of a magnetically modulated gear.
Fig. 5 is a cross-sectional view illustrating a gear motor according to Modification Example 1 of the embodiment.
Fig. 6 is a diagram illustrating an effect of reducing torque pulsation by a countermeasure A.
Fig. 7 is a cross-sectional view illustrating a gear motor according to Modification Example 2 of the embodiment.
Fig. 8 is a cross-sectional view illustrating a gear motor according to Modification Example 3 of the embodiment.

### Description of Embodiments

Hereinafter, an embodiment of the present invention will be described in detail with reference to the drawings.

### [Configuration of Gear Motor]

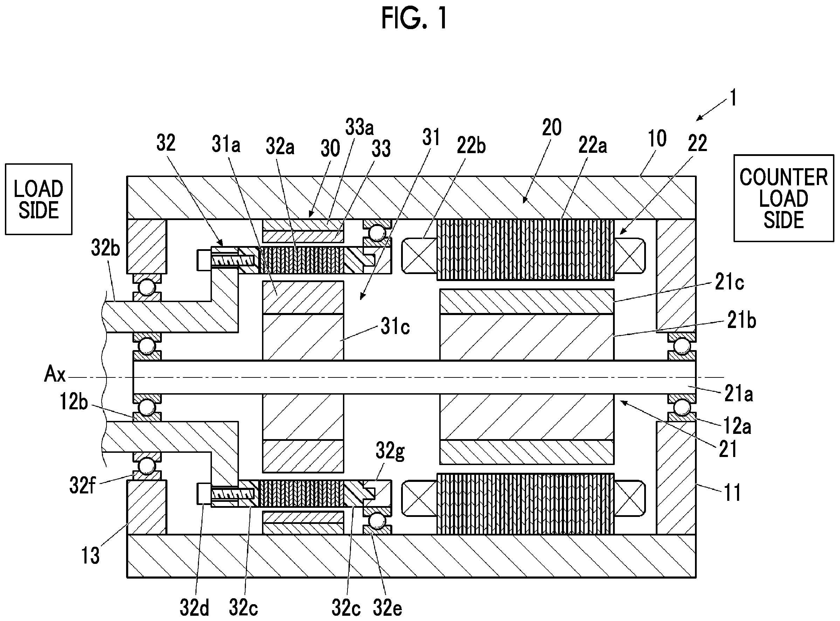

Fig. 1 is a cross-sectional view illustrating a gear motor 1 according to this embodiment.

As illustrated in Fig. 1, the gear motor 1 according to this embodiment includes a motor 20 and a speed reducer 30 which are accommodated in a common casing (frame) 10.

### <Motor>

The motor 20 includes a motor rotor 21 and a motor stator 22.

The motor rotor 21 includes a shaft 21a, a rotor yoke 21b, and a rotor magnet 21c. The rotor yoke 21b is made of a magnetic body and is fitted and fixed to an outer peripheral surface of the shaft 21a. The rotor magnet 21c is a permanent magnet such as a neodymium magnet. A plurality of rotor magnets 21c corresponding to a predetermined number of poles are attached to a portion, which is located on an inner diameter side of the motor stator 22, in an outer peripheral surface of the rotor yoke 21b.

In addition, in the following description, a direction along a center axis Ax of the shaft 21a is referred to as an "axial direction", a direction perpendicular to the center axis Ax is referred to as a "radial direction", and a rotation direction about the center axis Ax is referred to as a "circumferential direction". Further, in the axial direction, a side (a left side in Fig. 1) that is connected to an external driven member is referred to as a "load side", and a side (a right side in Fig. 1) opposite to the load side is referred to as a "counter load side".

Further, the motor rotor 21 is supported by two bearings (for example, ball bearings) 12a and 12b that support the shaft 21a.

Of the two bearings, the bearing 12a on the counter load side is disposed between the shaft 21a and a counter load-side cover 11 that is fixed to the casing 10. The counter load-side cover 11 is fixed to the casing 10 to cover the counter load side of the motor stator 22 and rotatably supports the shaft 21a (motor rotor 21) with the bearing 12a interposed therebetween.

On the other hand, the bearing 12b on the load side is disposed between a low-speed rotor 32 (output member 32b) of the speed reducer 30, which will be described later, and the shaft 21a to be closer to the load side than the speed reducer 30. The low-speed rotor 32 and the shaft 21a are rotatable with respect to each other through the bearing 12b.

The motor stator 22 is configured by winding a coil 22b around a stator core 22a that is made of a laminated steel plate. The motor stator 22 is disposed concentrically on the outer diameter side of the motor rotor 21 and is held in the casing 10 in a state in which the stator core 22a is fitted into the casing 10.

### <Speed Reducer>

The speed reducer 30 is disposed on the load side of the motor 20, decelerates a rotation input from the motor 20, and outputs the rotation to the load side. The speed reducer 30 and the motor 20 share a common shaft (the motor rotor 21 and a high-speed rotor 31) and are not separated from each other by a partition wall or the like.

Specifically, the speed reducer 30 is a magnetically modulated gear and includes the high-speed rotor (input shaft) 31, the low-speed rotor (output shaft) 32, and an outer pole magnet 33.

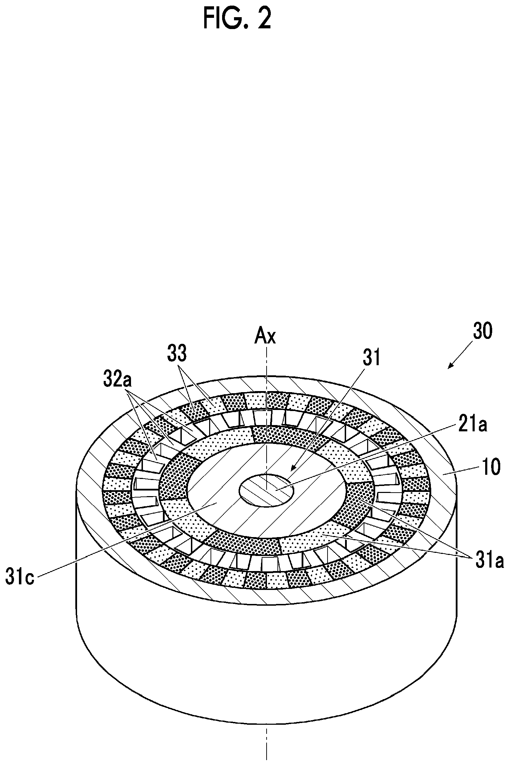

Fig. 2 is a perspective view illustrating a main portion of the speed reducer 30.

As illustrated in Figs. 1 and 2, the high-speed rotor 31 includes the shaft 21a that is shared by the motor rotor 21 of the motor 20, a rotor yoke 31c, and an inner pole magnet 31a. The shaft 21a extends in the axial direction from the motor 20 to the speed reducer 30, and both end portions of the shaft 21a are supported by the bearings 12a and 12b. The inner pole magnet 31a is a permanent magnet such as a neodymium magnet. A plurality of inner pole magnets 31a having different polarities are attached to an outer peripheral surface of the rotor yoke 31c to be alternately disposed in the circumferential direction. The inner pole magnets 31a form poles that do not contribute to generating the torque of the motor 20, and the number of poles of the inner pole magnets 31a may be different from or the same as the number of field poles of the motor 20. In addition, the inner pole magnets 31a may be integrated in a ring shape or the divided inner pole magnets 31a may be arranged in the circumferential direction.

In addition, the high-speed rotor 31 is preferably configured integrally with the motor rotor 21 and more preferably shares at least one shaft component with the motor rotor 21.

In this embodiment, the low-speed rotor 32 is formed in a stepped cylindrical shape and is disposed concentrically with the high-speed rotor 31. The low-speed rotor 32 has a pole piece 32a disposed on the outer diameter side of the inner pole magnet 31a.

The pole piece 32a is made of a laminated steel plate. A plurality of pole pieces 32a are disposed at predetermined intervals in the circumferential direction. The number of pole pieces 32a is the number of outer pole pairs (the number of pole pairs of the outer pole magnets 33) ± the number of inner pole pairs (the number of pole pairs of the inner pole magnets 31a) and is generally the number of outer pole pairs + the number of inner pole pairs. Two pole pieces 32a that are adjacent to each other in the circumferential direction may be connected by a thin connection portion or a non-magnetic body or may not be connected to each other.

In addition, the low-speed rotor 32 has the output member 32b connected to the load side of the pole piece 32a. More specifically, resin portions 32c are fixed to both end portions of the pole piece 32a in the axial direction, and the output member 32b is fixed to the resin portion 32c on the load side by a bolt 32d (which is made of, for example, super engineering plastic). The bolt 32d may be fixed in the radial direction instead of the axial direction or may be molded integrally with the resin portion 32c. A load-side end portion of the output member 32b is exposed from the casing 10 and is connected to a driven member (not illustrated). The low-speed rotor 32 is rotatably supported by the casing 10 through a bearing 32e that is provided on the counter load side of the pole piece 32a and a bearing 32f that is provided on the load side of the pole piece 32a. Of the two bearings, the bearing 32e on the counter load side is disposed between the casing 10 and a ring member 32g that is made of stainless steel and that is fixed to the resin portion 32c on the counter load side of the pole piece 32a. On the other hand, the bearing 32f on the load side is disposed between the output member 32b and a load-side cover 13 that is fixed to a load-side end portion of the casing 10.

The outer pole magnets 33 are concentrically disposed on the outer diameter side of the pole pieces 32a with a predetermined clearance interposed therebetween. The outer pole magnets 33 are stators that have a larger number of poles than the inner pole magnets 31a of the high-speed rotor 31 and that are attached to an inner peripheral surface of the casing 10, with a yoke portion 33a (not illustrated in Fig. 2) interposed therebetween, such that a plurality of outer pole magnets 33 having different polarities are alternately disposed in the circumferential direction. In addition, the outer pole magnets 33 may be integrated in a ring shape or the divided outer pole magnets 33 may be arranged in the circumferential direction.

### [Countermeasures Against Vibration and Noise]

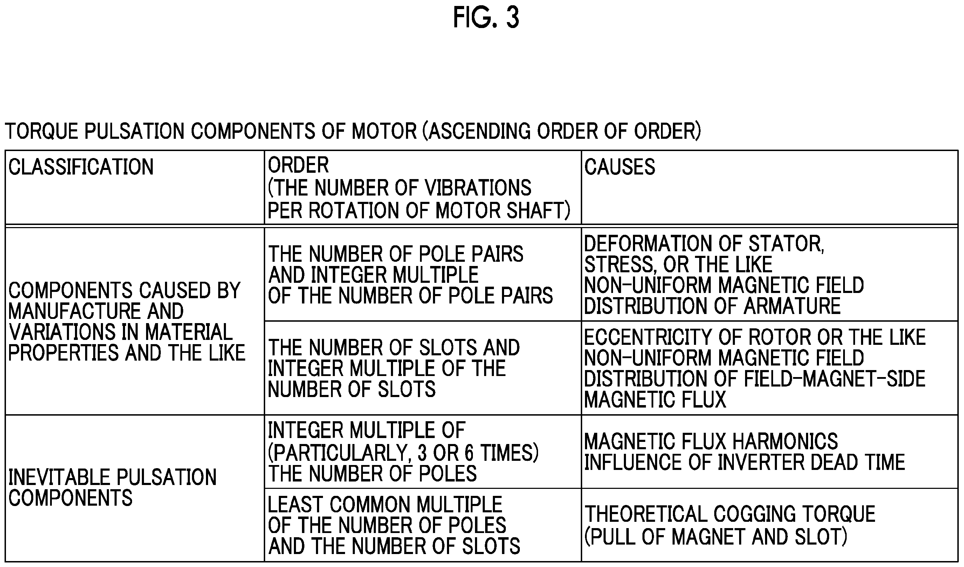

In general, it is known that output torque pulsation occurs in a motor. This torque pulsation is the cause of vibration and noise. For the torque pulsation of the motor, various frequencies are generated not only by the number of poles or the number of slots of the stator, but also by the deformation or eccentricity of components occurring in a manufacturing process. For example, it is said that a pulsation component, such as a cogging torque component caused by a manufacturing error, is generated in addition to cogging torque generated when a motor is manufactured in an ideal state, a wave having a frequency that is six times the number of poles, or a component having a frequency that is an integer multiple of the number of poles. A specific torque pulsation component of the motor is illustrated in Fig. 3.

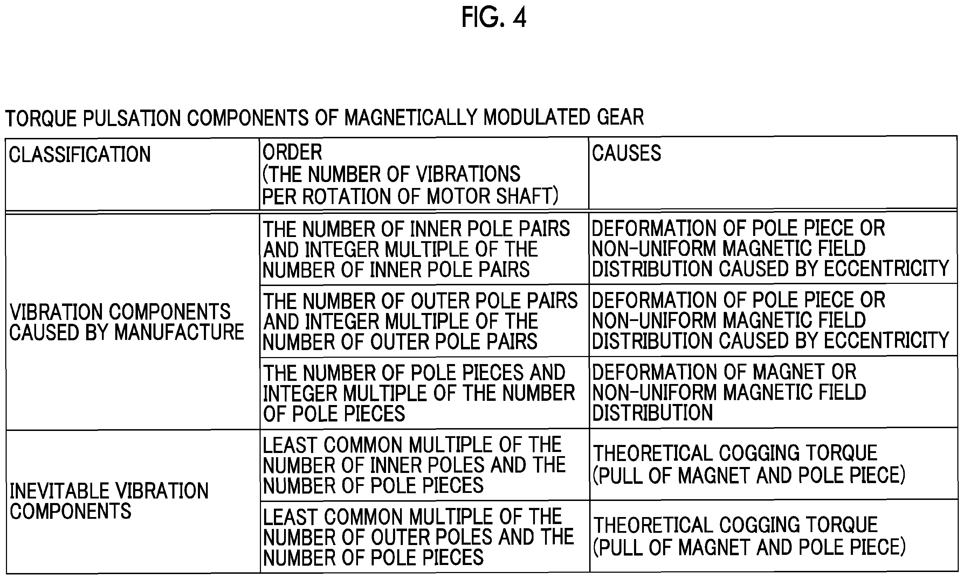

Meanwhile, in the magnetically modulated gear, a torque pulsation component related to the number of inner pole pairs, an integer multiple thereof, the number of outer pole pairs, and the like is generated. In general, a vibration component related to the number of inner pole pairs of low-order vibration components is generated. Fig. 4 illustrates specific torque pulsation components of the magnetically modulated gear.

The torque pulsation component (vibration component) of the motor or the magnetically modulated gear described above can be a vibration source of the gear motor and can be the cause of vibration or noise. Further, when the torque pulsation components of the motor and the magnetically modulated gear are synchronized, vibration or noise increases.

Therefore, in the gear motor 1 according to this embodiment, vibration or noise is reduced by avoiding the synchronization between vibration components in the motor 20 and the speed reducer 30 (making the frequencies of the vibration components different from each other).

In this embodiment, the motor 20 and the speed reducer 30 are configured such that magnetic fluctuation components thereof do not have an integer multiple relationship.

Specifically, the following countermeasures A to F are adopted.
A: The number of pole pairs of the motor 20 (the number of pole pairs of the rotor magnet 21c) and the number of inner pole pairs of the speed reducer 30 do not have an integer multiple relationship.
B: The number of pole pairs of the motor 20 and the number of outer pole pairs of the speed reducer 30 do not have an integer multiple relationship.
C: The number of pole pairs of the motor 20 and the number of pole pieces (the number of pole pieces 32a) of the speed reducer 30 do not have an integer multiple relationship.
D: The number of stator slots of the motor 20 (the number of slots of the motor stator 22) and the number of inner pole pairs of the speed reducer 30 do not have an integer multiple (1 to 3 times) relationship.
E: The number of stator slots of the motor 20 and the number of outer pole pairs of the speed reducer 30 do not have an integer multiple relationship.
F: The number of stator slots of the motor 20 and the number of pole pieces of the speed reducer 30 do not have an integer multiple relationship.

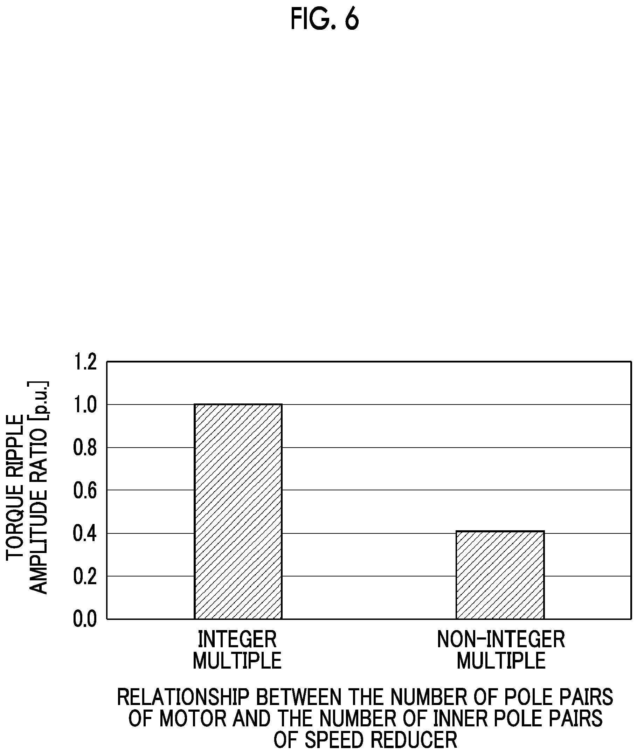

Fig. 6 illustrates the effect of reducing torque pulsation (ripple) by the countermeasure A among the countermeasures.

As illustrated in Fig. 6, in a case where the number of pole pairs of the motor 20 and the number of inner pole pairs of the speed reducer 30 do not have an integer multiple relationship, the amplitude of the torque pulsation is reduced to about 40% of the amplitude in a case where they have an integer multiple relationship.

In addition, at least one of the countermeasures A to F may be adopted. That is, the number of pole pairs or the number of stator slots of the motor 20 and the number of inner pole pairs, the number of outer pole pairs, or the number of pole pieces of the speed reducer 30 may not have an integer multiple relationship. However, it is desirable that as many countermeasures as possible are adopted. In addition, for example, the priority order of the countermeasures A to F is preferably A, D, C, and others.

In addition, in the countermeasures A to F, it is desirable that a state of "not having an integer multiple relationship" is established. Since it is desired to suppress low-order resonance with a stronger excitation force, a high-order (for example, fifth order or higher) integer multiple relationship may be allowed.

### [Operation of Gear Motor]

In the gear motor 1, when the coil 22b of the motor 20 is energized and the motor stator 22 generates a rotating magnetic field, rotation torque acts on the rotor magnet 21c, and the motor rotor 21 is rotated about the center axis Ax.

Then, the high-speed rotor 31 of the speed reducer 30 that is configured integrally with the motor rotor 21 is also rotated, and the rotation is input to the speed reducer 30. When the high-speed rotor 31 is rotated, a spatial magnetic flux waveform of the inner pole magnet 31a of the high-speed rotor 31 is modulated into the same frequency as that of the outer pole magnet 33 by the pole piece 32a of the low-speed rotor 32, and the rotation torque is transmitted to the low-speed rotor 32 by the magnetic force between the pole piece 32a and the outer pole magnet 33. In this case, a reduction ratio is the number of pole pieces/the number of inner pole pairs.

Therefore, the rotating motion decelerated by the speed reducer 30 is output to the driven member (not illustrated) that is connected to the output member 32b of the low-speed rotor 32.

### [Technical Effect of This Embodiment]

As described above, according to this embodiment, the motor 20 and the speed reducer 30 are configured such that vibration components thereof have different frequencies, specifically, magnetic fluctuation components thereof do not have an integer multiple relationship.

Therefore, it is possible to avoid the synchronization between the vibration components of the motor 20 and the speed reducer 30 and to suitably suppress vibration and noise.

### [Modification Example 1]

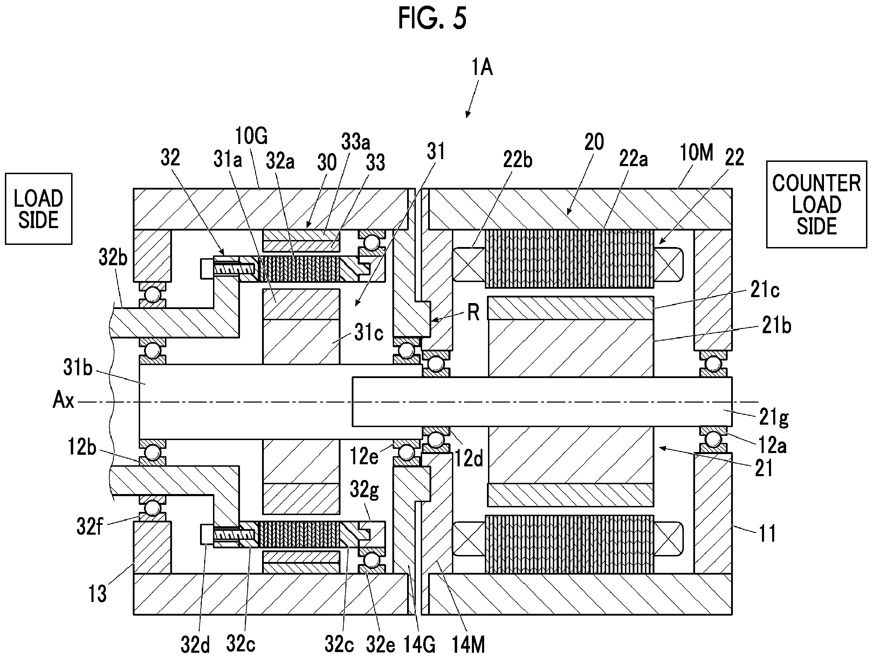

Fig. 5 is a cross-sectional view illustrating a gear motor 1A according to Modification Example 1 of the above-described embodiment.

The gear motor 1A according to this modification example is different from the gear motor according to the above-described embodiment in that the motor 20 and the speed reducer 30 are configured to be detachable. Hereinafter, this difference will be mainly described. The same components as those in the above-described embodiment are denoted by the same reference numerals, and a description thereof will not be repeated.

As illustrated in Fig. 5, in the gear motor 1A, a casing (frame) is divided into a motor casing 10M that accommodates the motor 20 and a speed reducer casing 10G that accommodates the speed reducer 30.

Further, in the gear motor 1A, unlike the above-described embodiment, a shaft is not common to the motor 20 and the speed reducer 30 and is divided into a motor shaft 21g for the motor 20 and a speed reducer shaft 31b for the speed reducer 30. The motor shaft 21g and the speed reducer shaft 31b are connected (fitted) to transmit power.

The motor casing 10M and the speed reducer casing 10G are separated from each other by a partition wall 14M on the side of the motor 20 and a partition wall 14G on the side of the speed reducer 30.

The partition wall 14M on the side of the motor 20 is fixed to the motor casing 10M. In addition, the partition wall 14M rotatably supports the motor shaft 21g with a bearing 12d provided in an inner peripheral portion. On the other hand, the partition wall 14G on the side of the speed reducer 30 is fixed to the speed reducer casing 10G. In addition, the partition wall 14G rotatably supports the speed reducer shaft 31b with a bearing 12e provided in an inner peripheral portion.

The partition wall 14M and the partition wall 14G are fitted to each other by a spigot joint portion R to be centered with desired accuracy. In addition, each of the partition wall 14M and the partition wall 14G has a flange portion (not illustrated) that protrudes from an outer peripheral portion, and the partition wall 14M and the partition wall 14G are fixed to each other by fastening bolts inserted into the flange portions.

The motor 20 and the speed reducer 30 can be configured to be detachable by this structure.

As described above, the motor 20 and the speed reducer 30 may be separated by the partition walls 14M and 14G. In this configuration, the same effects as those in the above-described embodiment can also be obtained.

### [Modification Example 2]

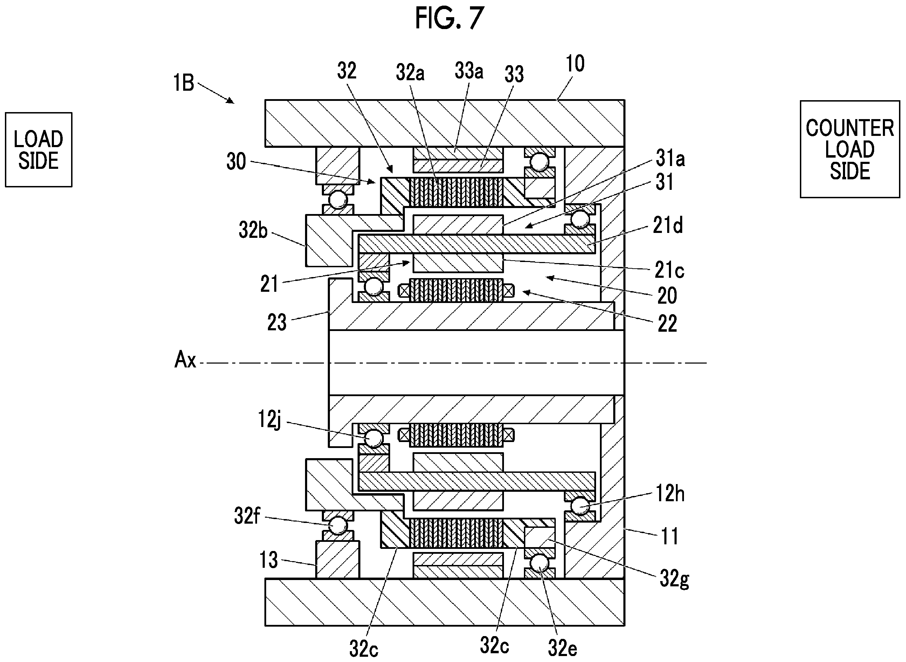

Fig. 7 is a cross-sectional view illustrating a gear motor 1B according to Modification Example 2 of the above-described embodiment.

The gear motor 1B according to this modification example is different from the gear motor according to the above-described embodiment in that the motor 20 is disposed on the inner diameter side of the speed reducer 30. Hereinafter, this difference will be mainly described. The same components as those in the above-described embodiment are denoted by the same reference numerals, and a description thereof will not be repeated.

As illustrated in Fig. 7, in the gear motor 1B, the motor 20 is disposed on the inner diameter side of the speed reducer 30. In addition, the gear motor having this configuration is described in detail in, for example, "K. T. Chau et al., "Design of a magnetic-geared outer-rotor permanent-magnet brushless motor for electric vehicles" IEEE TRANSACTIONS ON MAGNETICS, VOL. 43, NO. 6, JUNE 2007.".

In the motor 20, the motor stator 22 is attached to an outer peripheral surface of a fixed inner frame 23.

The motor rotor 21 is disposed on the outer peripheral side of the motor stator 22. The motor rotor 21 has a rotor magnet 21c. The rotor magnet 21c is disposed concentrically on the outer diameter side of the motor stator 22 in a state of being fixed to an inner peripheral surface of a cylindrical shaft 21d. The shaft 21d is made of a magnetic body or a laminated steel plate and is supported by two bearings (for example, ball bearings) 12h and 12j. Of the two bearings, the bearing 12h on the counter load side is disposed between the shaft 21d and the counter load-side cover 11 that is fixed to the casing (outer frame) 10 and the inner frame 23. On the other hand, the bearing 12j on the load side is disposed between the inner frame 23 and the shaft 21d.

The speed reducer 30 includes the high-speed rotor (input shaft) 31, the low-speed rotor (output shaft) 32, and the outer pole magnet 33.

Among these components, the high-speed rotor 31 is configured integrally with the motor rotor 21 of the motor 20 and includes the shaft 21d shared by the motor rotor 21 and the inner pole magnet 31a. The inner pole magnet 31a is fixed to an outer peripheral surface of the shaft 21a.

The low-speed rotor 32 and the outer pole magnet 33 are configured in substantially the same manner as those in the above-described embodiment.

That is, the low-speed rotor 32 has the pole piece 32a that is disposed on the outer diameter side of the inner pole magnet 31a and the output member 32b that is connected to the pole piece 32a. The output member 32b is connected to a driven member (not illustrated).

Meanwhile, the outer pole magnet 33 is concentrically disposed on the outer diameter side of the pole piece 32a in a state of being fixed to the inner peripheral surface of the casing 10 with the yoke portion 33a interposed therebetween.

In the gear motor 1B having the above configuration, when the motor stator 22 of the motor 20 generates a rotating magnetic field, rotation torque acts on the rotor magnet 21c such that the motor rotor 21, that is, the high-speed rotor 31 of the speed reducer 30 is rotated about the center axis Ax. When the high-speed rotor 31 is rotated, a spatial magnetic flux waveform of the inner pole magnet 31a of the high-speed rotor 31 is modulated into the same frequency as that of the outer pole magnet 33 by the pole piece 32a of the low-speed rotor 32, and the rotation torque is transmitted to the low-speed rotor 32 by the magnetic force between the pole piece 32a and the outer pole magnet 33. In this case, a reduction ratio is the number of pole pieces/the number of inner pole pairs. Therefore, the rotating motion decelerated by the speed reducer 30 is output to the driven member (not illustrated) that is connected to the output member 32b of the low-speed rotor 32.

As described above, the motor 20 may be disposed on the inner diameter side of the speed reducer 30. In this configuration, the same effects as those in the above-described embodiment can also be obtained.

### [Modification Example 3]

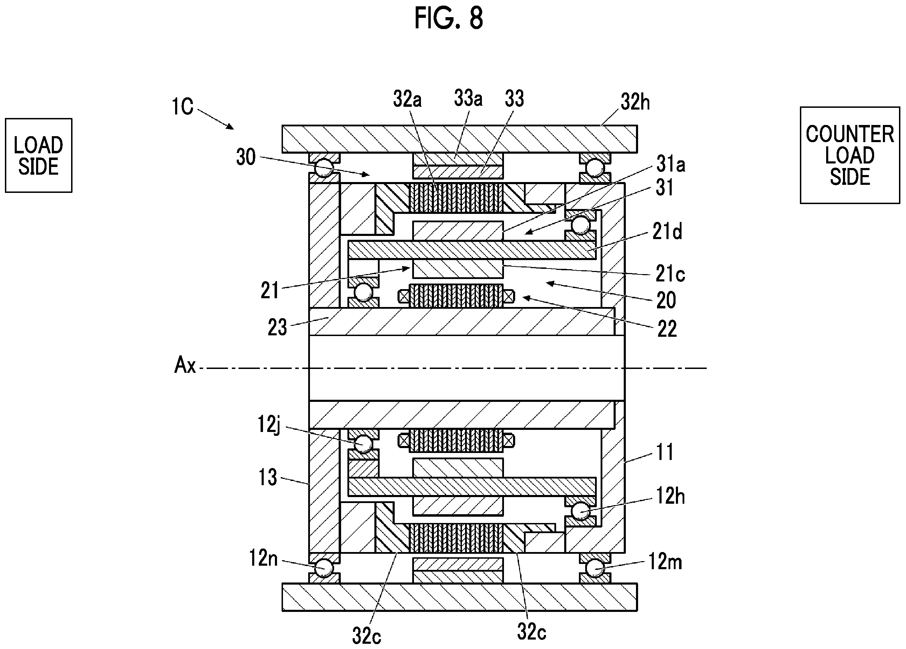

Fig. 8 is a cross-sectional view illustrating a gear motor 1C according to Modification Example 3 of the above-described embodiment.

The gear motor 1C according to this modification example is different from the gear motor according to the modification example 2 in that the pole piece 32a of the speed reducer 30 is fixed and the outer pole magnet 33 is provided in a rotatable output member (low-speed rotor) 32h. Hereinafter, this difference will be mainly described. The same components as those in Modification Example 2 are denoted by the same reference numerals, a description thereof will not be repeated.

As illustrated in Fig. 8, in the speed reducer 30 of the gear motor 1C, the pole piece 32a is disposed on the outer diameter side of the inner pole magnet 31a in a state of being fixed to the counter load-side cover 11 and the load-side cover 13.

Further, in the speed reducer 30, the output member 32h is disposed on the outer diameter side of the outer pole magnet 33. The outer pole magnet 33 is disposed on the outer diameter side of the pole piece 32a in a state of being fixed to an inner peripheral surface of the output member 32h, with the yoke portion 33a interposed therebetween. The output member 32h is supported by two bearings (for example, ball bearings) 12m and 12n. The bearing 12m on the counter load side is disposed between the counter load-side cover 11 and the output member 32h, and the bearing 12n on the load side is disposed between the load-side cover 13 and the output member 32h.

In the gear motor 1C having the above configuration, rotational power input from the motor 20 is taken out from the output member 32h connected to the outer pole magnet 33. In this case, the reduction ratio is the negative of the number of outer pole pairs/the number of inner pole pairs. In this configuration, the same effects as those in the above-described embodiment can also be obtained.

### [Others]

The embodiment of the present invention has been described above. However, the present invention is not limited to the above-described embodiment.

For example, the motor 20 and the speed reducer 30 may have any configuration as long as they have different frequencies of vibration components as the countermeasure against vibration and noise. In this case, the frequencies of the motor 20 and the speed reducer 30 may be slightly different from each other. For example, the percentage of the deviation between the frequencies is preferably equal to or greater than 10% and more preferably equal to or greater than 20%.

In addition, the type and structure of the motor 20 are not particularly limited, and the motor 20 may be any of a surface permanent magnet motor (SPM motor), an interior permanent magnet motor (IPM motor), an induction motor, a direct current motor, and the like.

In addition, it is preferable that the motor 20 is configured to operate as a generator. In this case, when rotational power is input from the speed reducer 30 to the motor 20, the motor 20 can take out the rotational power as electric energy. In addition, in this case, of course, the speed reducer 30 functions as a speed increaser. Further, in a case where the motor 20 is operated as a generator, wind power, hydraulic power, or the like may be used as power. In a case where a driving force of a rotating body (for example, a water wheel or a propeller) that is rotated by power is used as an input, the relationship between an output shaft and an input shaft is opposite to the above-described relationship related to the motor.

Further, in the speed reducer 30 according to the above-described embodiment (excluding Modification Example 3), the outer pole magnet 33 is used as the stator, and output is taken out from the low-speed rotor 32 having the pole piece 32a. However, the pole piece 32a may be fixed, the outer pole magnet 33 may be provided in a rotatable low-speed rotor, and output may be taken out from the low-speed rotor. In this case, the reduction ratio is the negative of the number of outer pole pairs/the number of inner pole pairs.

In addition, the details of the above-described embodiment can be appropriately changed without departing from the scope of the present invention.

### Industrial Applicability

As described above, the gear motor according to the present invention is useful for suitably suppressing vibration and noise.

### Reference Signs List

- 1, 1A, 1B, 1C: gear motor
- 20: motor
- 21: motor rotor
- 21c: rotor magnet
- 22: motor stator
- 30: speed reducer
- 31: high-speed rotor
- 31a: inner pole magnet
- 32: low-speed rotor
- 32a: pole piece
- 33: outer pole magnet

## Claims

1. A gear motor comprising:
a motor; and
a magnetically modulated gear,
wherein the motor and the magnetically modulated gear have different frequencies of vibration components.

2. The gear motor according to claim 1,
wherein the motor and the magnetically modulated gear are configured such that magnetic fluctuation components thereof do not have an integer multiple relationship.

3. The gear motor according to claim 2,
wherein the number of pole pairs or the number of stator slots of the motor and the number of inner pole pairs, the number of outer pole pairs, or the number of pole pieces of the magnetically modulated gear do not have an integer multiple relationship.

4. The gear motor according to claim 3,
wherein the number of pole pairs of the motor and the number of inner pole pairs of the magnetically modulated gear do not have an integer multiple relationship.

5. The gear motor according to claim 3 or 4,
wherein the number of pole pairs of the motor and the number of outer pole pairs of the magnetically modulated gear do not have an integer multiple relationship.

6. The gear motor according to any one of claims 3 to 5,
wherein the number of pole pairs of the motor and the number of pole pieces of the magnetically modulated gear do not have an integer multiple relationship.

7. The gear motor according to any one of claims 3 to 6,
wherein the number of stator slots of the motor and the number of inner pole pairs of the magnetically modulated gear do not have an integer multiple relationship.

8. The gear motor according to any one of claims 3 to 7,
wherein the number of stator slots of the motor and the number of outer pole pairs of the magnetically modulated gear do not have an integer multiple relationship.

9. The gear motor according to any one of claims 3 to 8,
wherein the number of stator slots of the motor and the number of pole pieces of the magnetically modulated gear do not have an integer multiple relationship.

10. The gear motor according to any one of claims 1 to 9,
wherein the motor is capable of operating as a generator.
